Europäisches Patentamt

European Patent Office

Office européen des brevets

(19)

(11) Publication number: **0 167 625**

A1

## (12) EUROPEAN PATENT APPLICATION

published in accordance with Art. 158(3) EPC

(21) Application number: 83903825.4

(22) Date of filing: 02.12.83

Data of the international application taken as a basis:

(86) International application number:
PCT/JP83/00428

(87) International publication number:
WO85/02349 (06.06.85 85/13)

(51) Int. Cl.⁴: **A 63 H 27/12**

---

(43) Date of publication of application:
15.01.86 Bulletin 86/3

(84) Designated Contracting States:
DE FR GB

(71) Applicant: IZUTSUYA, Kiyonobu
685-43, Oaza Tsuruhada, Hokubumachi
Hotaku-gun Kumamoto 861-55(JP)

(72) Inventor: IZUTSUYA, Kiyonobu
685-43, Oaza Tsuruhada, Hokubumachi
Hotaku-gun Kumamoto 861-55(JP)

(74) Representative: Barrett, James William et al,
A.A. THORNTON & CO. Northumberland House 303-306
High Holborn
London WC1V 7LE(GB)

---

(54) SMALL RADIO-CONTROLLED INDUSTRIAL HELICOPTER.

(57) A small, radio-controlled helicopter with an internal-combustion engine with two opposed, simultaneous-ignition cylinders to reduce ignition vibrations applied to the helicopter body. Thus, when this small helicopter is equipped with apparatus for video recording or photography, it is possible to obtain clear picture images while preventing any unwanted movement of the camera. In addition, various other operations, such as the spreading of pharmaceuticals and the guiding of lead ropes, can be conducted stably.

FIG 3

EP 0 167 625 A1

SPECIFICATION

RADIO-CONTROLLED MINIATURE HELICOPTER FOR INDUSTRIAL USE

TECHNICAL FIELD

The present invention relates to a radio-controlled miniature helicopter for industrial use, which is applicable to a video recording action, a photographic recording action, their combined action, a chemicals spraying action, a lead-rope guiding action for a transmission line and a cableway, and other working actions.

TECHNICAL BACKGROUND

Hitherto, a conventionally used radio-controlled miniature helicopter employs a single-cylinder miniature engine by which a main shaft of its rotor is rotatably driven. Due to such construction, the conventional miniature helicopter suffers from its body vibration caused by its single-cylinder miniature engine operation which brought from explosion ignited, and consequently itis not applicable to an industrial use.

Under such circumstances, it is an object of the present invention to provide a radio-controlled miniature helicopter, which being the least of the said body vibration or not suffering the said one, to be applicable to an industrial use.

THE DISCLOSER OF THE INVENTION

Namely, the radio-controlled miniature helicopter of the present invention is provided with an even numbers-cylinder type of an internal combustion engine in which a pair of cylinders are symmetrically arranged to form opposite cylinders construction, and these opposite cylinders are simultaneously ignited to rotatably drive a main shaft of a rotor thereof. Since vibrationmotive forces cuased by combustion impacts in the pair of opposite cylinders are offset with each other, the body vibration caused by such combustion impacts is drastically reduced to make it possible that the miniature helicopter of the present invention performs any working action in steady manner.

BRIEF DESCRIPTION OF THE DRAWINGS

Fig. 1 is a side elevational view of an interlocking mechanism for the internal combustion engine and the rotor of the miniature helicopter according to an embodiment of the present invention;

Fig. 2 is a plan view of the internal combustion engine as shown in Fig. 1, which engine is a horizontally opposite and simultaneously ignited two-cylinder type engine; and

Fig. 3 is an enlarged cross-sectional view of the engine taken along line A-A of Fig. 2.

THE BEST EMBODIMENT OF THE INVENTION

The present invention will now be described in detail, by way of example, with reference to the accompanying drawings which show an embodiment of a construction of

a miniature helicopter equipped with a horizontally opposite and simultaneously ignited two-cylinder type of an internal combustion engine according to the present invention.

A body of the miniature helicopter 1 of the present invention is shown with the use of a one-dot-chain line, on which body an internal combustion engine 2 is mounted. Rotation of a crank shaft 3 of the engine 2 is transmitted to a reduction device 5 through a timing belt 4 and then to a rotor main shaft 6 to rotate a rotor 7 mounted on an upper end of the miniature helicopter 1.

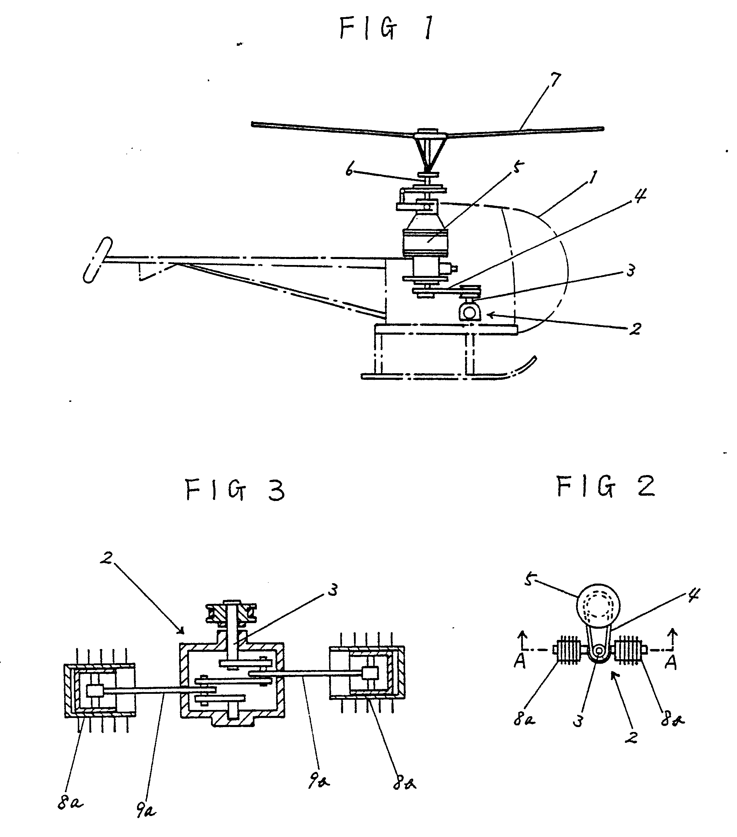

The internal combustion engine 2 is a horizontally opposite and simultaneously ignited two-cylinder type engine as shown in Figs. 2 and 3, in which engine 2 two cylinders 8a, 8b are symmetrically arranged with respect to the crank shaft 3 in the same plane. Pistons received in these cylinders 8a, 8b are connected to the crank shaft 3 through connecting rods 9a, 9b, respectively, in which cylinders 8a, 8b the combustion strokes of the pistons are simultaneously performed.

Now, action and effect of the miniature helicopter of the present invention will hereinafter be described with reference to the accompanying drawings.

The rotor 7 of the radio-controlled miniature helicopter 1 is rotated by the opposite and simultaneously ignited two-cylinder engine 2 in an interlocking manner, in which engine 2 the combustions are simultaneously conducted in both opposite cylinders 8a, 8b which are symmetrically arranged with respect to the crank 3 in the same plane. Consequently, the vibrationmotive forces caused by the above combustions are offset with each other to reduce the body vibration of the miniature helicopter 1 drastically to the extent of one-twentieth of that of the conventional miniature helicopter employing a conventional single-cylinder type of an internal combustion engine. Further, in comparison with a conventional miniature helicopter employing the same numbers-cylinder type of the conventional engine, the body vibration of the miniature helicopter 1 of the present invention is reduced to the extent of one-tenth of that of the conventional helicopter. The drawings show the horizontally opposite two-cylinder type of the internal combustion engine. However, instead of this type engine, it is possible to employ a plurality of pairs of horizontally or vertically opposite two-cylinder in-lines type of an internal combustion engine each pair of opposite two cylinders of which lines are simultaneously ignited. Since the body vibration of the miniature helicopter 1 is remarkably reduced because of the above reasons, the miniature helicopter 1 carries a video-camera and a photographic camera in a vibrationless manner to perform steady a video recording action and a photographic recording action under a remote control from the ground so as to get sharp image recording. Further, because of the same reasons as mentioned above, the miniature helicopter 1 can steady perform a chemicals spraying action, and a lead-rope guiding action for a transmission line and a cableway.

## APPLICABILITY OF INDUSTRIAL USE

By remarkably reducing the body vibration of the radio-controlled miniature helicopter according to the present invention, it is possible to get a more sharp image recording than that obtained hitherto in an aerial video recording action and an aerial photographic recording action with the use of the miniature helicopter, and also it is possible to save manpower in the chemicals spraying action and the lead-rope guiding action for the transmission line and the cableway with the use of the miniature helicopter on which a chemicals tank for an aerial spraying use and the like are mounted.

## CLAIM

A radio-controlled miniature helicopter for an industrial use comprising: by which characterizing a rotor main shaft and an even numbers-cylinder type of an internal combustion engine opposite two cylinders of which are simultaneously ignited, together with a crank shaft of which engine is interlocked with said rotor main shaft.

FIG 1

FIG 3          FIG 2

# INTERNATIONAL SEARCH REPORT

0167625

International Application No. PCT/JP 83/00428

## I. CLASSIFICATION OF SUBJECT MATTER (if several classification symbols apply, indicate all) [3]

According to International Patent Classification (IPC) or to both National Classification and IPC

Int. Cl$^3$   A63H27/12

## II. FIELDS SEARCHED

| Minimum Documentation Searched [4] | |
|---|---|
| Classification System | Classification Symbols |
| IPC | A63H27/12, F01B1/08, B64C27/00 |

| | Documentation Searched other than Minimum Documentation to the Extent that such Documents are Included in the Fields Searched [8] |
|---|---|
| | Jitsuyo Shinan Koho          1920-1984<br>Kokai Jitsuyo Shinan Koho   1971-1984 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| Y | JP, Y1, 48-1041 (Yamada Kotaro) 12 January 1973 (12. 01. 73) Column 1, lines 14 to 20, 26 | 1 |
| Y | JP, U, 57-169501 (Kyoritsu Kabushiki Kaisha) 25 October 1982 (25. 10. 82) Column 1, lines 7 to 8 | 1 |
| A | JP, A, 55-148584 (Abe Takayuki) 19 November 1980 (19. 11. 80) Column 2, lines 13 to 18 | 1 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| February 27, 1984 (27. 02. 84) | March 5, 1984 (05. 03. 84) |

| International Searching Authority [1] | Signature of Authorized Officer [20] |
|---|---|
| Japanese Patent Office | |

Form PCT/ISA/210 (second sheet) (October 1981)